# EUROPEAN PATENT SPECIFICATION

(11) **EP 1 441 055 B1**
(45) Date of publication and mention of the grant of the patent: **25.03.2009**
(21) Application number: 04000454.1
(22) Date of filing: 12.01.2004
(51) Int. Cl.: D06F 37/36, D06F 35/00, D06F 37/30, D06F 39/00

(54) **Method for controlling dehydration speed of washing machine**
Verfahren zu Kontrolle der Schleudergeschwindigkeit einer Waschmaschine
Méthode pour contrôler la vitesse d'essorage d' une machine à laver

(30) Priority: 15.01.2003 KR 2003002768
(43) Date of publication of application: 28.07.2004
(73) Proprietor: LG ELECTRONICS INC., Seoul (KR)
(72) Inventor: Kim, Joon Woo, Gwangmyeong, Gyeonggi-Do (KR); Kim, Young Ho, Gwanak-Gu, Seoul (KR); Kim, Dong Won, Gwangmyeong, Gyeonggi-Do (KR); Min, Byoung Wook, Dongjak-gu, Seoul (KR)
(74) Representative: Cohausz & Florack

(56) References cited:
- WO-A-01/90472
- GB-A- 1 169 059
- US-A- 3 872 694
- US-A1- 2002 050 011
- PATENT ABSTRACTS OF JAPAN vol. 2000, no. 04, 31 August 2000 (2000-08-31) -& JP 2000 014974 A (HITACHI LTD), 18 January 2000 (2000-01-18)

## Description

### BACKGROUND OF THE INVENTION

### 1. Field of the Invention

The present invention relates to a washing machine, and more particularly, to a method for controlling a dehydration speed of a washing machine.

### 2. Description of the Background Art

In general, when detergent, water and laundry are put into a washing machine, especially a drum washing type washing machine, the washing machine washes the laundry by using a frictional force between a drum rotated by a driving force of a built-in motor and the laundry. In the drum washing type washing machine, the laundry is rarely damaged and tangled, and washing effects are improved as if the laundry was beaten and rubbed.

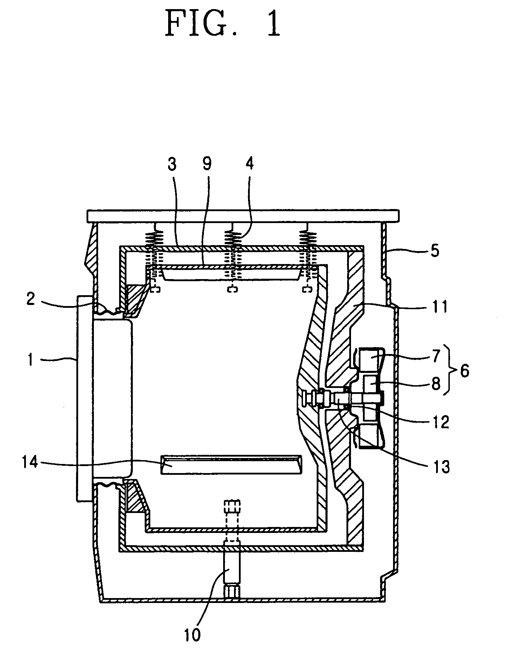

The structure of the conventional drum washing machine will now be explained with reference to Fig. 1.

Fig. 1 is a cross-sectional diagram illustrating the conventional drum washing machine.

Referring to Fig. 1, the drum washing machine includes a tub 3 installed inside a cabinet 5, a drum 9 installed inside the tub 3, a drum shaft 13 directly coupled to the drum 9, for transmitting a driving force of a motor 6 to the drum 9, bearings 12 installed in the front and rear sides of the drum shaft 13, a bearing housing (not shown) installed in the center of the rear wall of the tub 3, for supporting the bearings 12, a stator 7 installed on the rear wall of the tub 3, for forming the motor 6, a rotor 8 installed on the drum shaft 13, for forming the motor 6 with the stator 7, a door 1 installed in the front side of the cabinet 5, a gasket 2 installed between the door 1 and the tub 3, a hanging spring 4 installed between the inside of the top surface of the cabinet 5 and the upper side of the outer circumference of the tub 3, for supporting the tub 3, a friction damper 10 installed between the inside of the bottom surface of the cabinet 5 and the lower side of the outer circumference of the tub 3, for damping vibrations of the tub 3 during the dehydration, and a motor sensor 11 installed in one side of the motor 6, for sensing a rotation speed of the rotor 8. Here, the rotation speed of the rotor 8 implies the rotation speed of the motor 6.

A conventional method for controlling a dehydration speed of a drum washing machine will now be described.

When a mode of the washing machine is changed into a dehydration mode and the rotor 8 is rotated, the motor sensor 11 continuously senses the rotation speed of the rotor 8, and outputs the sensed speed to a controller (not shown).

The controller compares the rotation speed of the rotor 8 sensed by the motor sensor 11 with a preset rotation speed, and controls the rotation speed of the rotor 8 according to a dehydration speed suitable for the dehydration mode selected by the user.

The dehydration mode will now be explained in more detail.

The laundry is washed in a washing rotation speed (for example, about 45rpm to 50rpm(rpm : Revolution Per Minute)). To dehydrate the washed laundry, the rotation speed of the drum 9 connected to the rotor 8 is increased to about 100rpm by increasing the rotation speed of the rotor 8. The laundry is dehydrated in the rotation speed. That is, the controller (not shown) dehydrates the laundry by increasing the rotation speed of the rotor 8 to the dehydration speed set by the user (800rpm or 1400rpm).

However, the conventional washing machine includes a brushless direct current (BLDC) motor for converting the dehydration speed according to a kind of cloth or upon the user's request, which increases vibrations and noises. For example, if the rotation speed of the motor is controlled in the preset dehydration speed, regardless of a kind and amount of laundry put into the washing machine, even when the laundry is small, the motor is operated in the preset dehydration speed, thereby increasing vibrations and noises of the washing machine.

In addition, the conventional washing machine has the BLDC motor for converting the dehydration speed according to a kind of cloth or upon the user's request, which increases manufacturing expenses.

WO 01/90472 discloses a method for controlling a dehydration speed of a washing machine according to the preamble of claim 1.

### SUMMARY OF THE INVENTION

Therefore, an object of the present invention is to provide a method for controlling a dehydration speed of a washing machine which can reduce vibrations and noises of the washing machine.

To achieve these and other advantages and in accordance with the purpose of the present invention, as embodied and broadly described herein, there is provided a method according to claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a vertical-sectional diagram illustrating a conventional drum washing machine;
Fig. 2 is a flowchart showing a method for controlling a dehydration speed of a drum washing machine in accordance with the present invention;
Fig. 3 is an exemplary diagram illustrating conversion of a number of poles of a stator of a motor of the drum washing machine in accordance with the present invention; and
Fig. 4 is a graph showing torque-speed curves of the motor in the method for controlling the dehydration speed of the drum washing machine in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

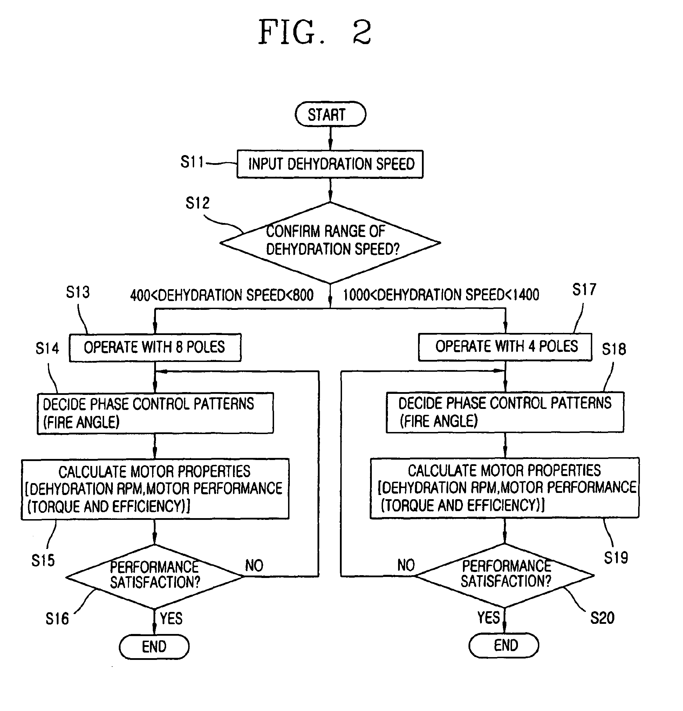

A method for controlling a dehydration speed of a washing machine which can reduce vibrations and noises of the washing machine by changing a number of poles of a motor of the washing machine, and controlling a voltage applied to the motor when the number of the poles is changed will now be described in detail with reference to Figs. 2 to 4.

Fig. 2 is a flowchart showing the method for controlling the dehydration speed of the drum washing machine in accordance with the present invention.

As illustrated in Fig. 2, the method for controlling the dehydration speed of the drum washing machine includes the steps of: inputting a preset dehydration speed by the user (S11); confirming the range of the input dehydration speed (S12); changing a number of poles of an induction motor installed in the drum washing machine according to the range of the dehydration speed (S13 and S17); converting the dehydration speed by controlling a phase of a voltage inputted to the induction motor installed in the drum washing machine, when the number of the poles of the motor is changed (S14 and S18); calculating the dehydration speed converted by changing the number of the poles of the motor and controlling the phase, and a torque and efficiency of the induction motor (S15 and S19); and evaluating performance satisfaction of the induction motor on the basis of the torque and efficiency of the induction motor (S16 and S20).

The operation of the method for controlling the dehydration speed of the drum washing machine in accordance with the present invention will now be described in more detail.

The user inputs the preset dehydration speed according to a dehydration course (S11). Here, when the user puts the laundry into the drum washing machine, a hall sensor (not shown) installed inside the drum washing machine senses a kind and amount of the laundry on the basis of the rotation speed of the motor, and sets the dehydration speed according to the kind and amount of the laundry (S12). The amount of the laundry can be sensed on the basis of the rotation speed of the motor measured when the motor is rotated in the preset rotation speed.

Thereafter, the range of the dehydration speed inputted by the user is confirmed. When the input dehydration speed is 800rpm, the number of the poles of the motor is changed into 8, and then the motor is operated. That is, when the motor has 8 poles, the rotation speed of the motor is 800rpm. Here, the rotation speed of the motor can be controlled between 400rpm and 800rpm by controlling the voltage applied to the motor by controlling the phase of the voltage when the motor is changed to have 8 poles.

Conversely, when the input dehydration speed is 1400rpm, the number of the poles of the motor is changed into 4, and then the motor is operated. That is, when the motor has 4 poles, the rotation speed of the motor is 1400rpm. Here, the rotation speed of the motor can be controlled between 1000rpm and 1400rpm by controlling the voltage applied to the motor by controlling the phase of the voltage when the stator of the motor is changed to have 4 poles.

Therefore, the dehydration speed can be variously converted by changing the number of the poles of the stator of the motor, and converting the voltage applied to the motor when the number of the poles is changed. In the related arts, the rotation speed of the motor is controlled according to the preset dehydration speed, regardless of the kind and amount of the laundry put into the washing machine. Accordingly, even when the laundry is small, the motor is operated in the preset dehydration speed, to increase vibrations and noises of the washing machine. However, in accordance with the present invention, the dehydration speed is set on the basis of the amount of the laundry put into the washing machine, and the rotation speed of the motor is controlled according to the dehydration speed, which reduces vibrations and noises of the washing machine.

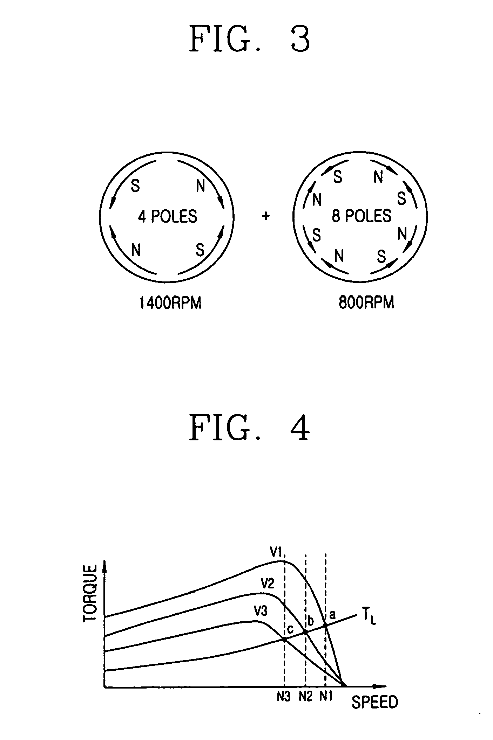

The phase control will now be explained in detail with reference to Fig. 4. Fig. 4 is a graph showing torque-speed curves of the motor in accordance with the present invention. As shown in Fig. 4, the laundry is dehydrated by rotating the drum in the dehydration speed N₁, N₂ and N₃ where a load torque T_{L} meets input voltage V₁, V₂ and V₃ applied to the motor, by adjusting the input voltage V₁, V₂ and V₃ by controlling the phase. Here, the load torque T_{L} is a torque applied to the drum.

The phase control of the present invention will now be described in more detail.

A Triac device which is a gate control semiconductor switch for alternating current power included in a phase control circuit is used to vary the speed of the induction motor when sine input voltage waveform, namely single phase power (for example, 220V/60Hz) is applied. That is, the operation speed of the motor is converted by adjusting the output voltage V_{1,} V₂ and V₃ by controlling a fire angle according to the input pulse signal of the Triac device.

In the case of the method for controlling the dehydration speed, when the dehydration speed selected by the user is 400rpm, the number of the poles of windings of the stator is changed into 8, and the input voltage V₃ is applied to the motor as shown in the torque-speed curves of Fig. 4, and when the dehydration speed selected by the user is 600rpm, the number of the poles of the motor is changed into 8, and the input voltage V₂ is applied to the motor. In addition, when the dehydration speed selected by the user is 800rpm, the number of the poles of the windings of the stator is changed into 8, and the input voltage V₁ is applied to the motor. That is, the dehydration speed 800rpm approximately obtained in the 8 poles of the stator can be varied in multiple steps by changing the input voltage applied to the motor by controlling the phase.

On the other hand, when the dehydration speed selected by the user is 1000rpm, the number of the poles of the motor is changed into 4, and the input voltage V₃ is applied to the motor, and when the dehydration speed selected by the user is 1200rpm, the number of the poles of the motor changed into 4, and the input voltage V₂ is applied to the motor. In addition, when the dehydration speed selected by the user is 1400rpm, the number of the poles of the motor is changed into 4, and the input voltage V₁ is applied to the induction motor. That is, the dehydration speed 1400rpm approximately obtained in the 4 poles of the motor can be varied in multiple steps by controlling the input voltage applied to the induction motor by controlling the phase.

Referring to Fig. 2, the steps for calculating the properties of the motor (S15 and S19) calculate the dehydration speed sensed by the motor sensor adhered to the motor, and the torque and efficiency of the motor, and the steps for evaluating performance satisfaction (S20 and S16) evaluate performance satisfaction on the basis of the values calculated in the steps for calculating the properties of the motor. Here, the routine goes to the final steps or the steps for deciding phase control patterns according to the performance satisfaction results.

As discussed earlier, in accordance with the present invention, the method for controlling the dehydration speed of the washing machine converts the dehydration speed into two-step speed (800rpm and 1400rpm) by changing the number of the poles of the motor, and controlling the input voltage applied to the motor by controlling the phase, thereby converting the dehydration speed in multiple steps.

Moreover, the method for controlling the dehydration speed of the washing machine remarkably reduces noises and vibrations of the washing machine.

## Claims

1. A method for controlling a dehydration speed of a washing machine, comprising the steps of:
setting the dehydration speed on the basis of an amount of laundry put into the washing machine; and
controlling a rotation speed of a motor of the washing machine on the basis of the set dehydration speed,
**characterized in that** the step of controlling the rotation speed comprises the following steps:
changing the number of poles of the motor according to the set dehydration speed;
controlling a voltage applied to the motor corresponding to the set number of poles and the set dehydration speed; and
converting the dehydration speed through a phase control of a voltage so that the voltage can be inputted to the motor.

2. The method of claim 1, wherein the dehydration speed is set by the user.

3. The method of claim 1, wherein the dehydration speed is set by sensing the amount and the quality of the laundry and by determining the dehydration speed according to the sensed data.

4. The method of one of claims 1 to 3, wherein the washing machine is a drum washing machine.

5. The method of one of claims 1 to 4, wherein the number of poles is changed into 4 or 8.

6. The method of one of claims 1 to 5, wherein the step of varying the current dehydration speed into the set dehydration speed through a phase control of a current voltage comprises the steps of:
sensing a fire angle corresponding to the dehydration speed; and
varying the voltage that is inputted to the motor according to the sensed fire angle.

7. The method of one of claims 1 to 6, wherein the motor is an induction motor.

8. The method of claim 1, further comprising setting a voltage applied to the motor according to a motor torque, a dehydration speed, and a load.

## Patentansprüche

1. Verfahren zur Regelung der Schleuderdrehzahl einer Waschmaschine, enthaltend die Schritte:
Einstellen der Schleuderdrehzahl auf der Basis einer in die Waschmaschine gegebenen Wäschemenge; und
Regeln einer Drehzahl eines Motors der Waschmaschine auf der Basis der eingestellten Schleuderdrehzahl,
**dadurch gekennzeichnet, dass** der Schritt der Regelung der Drehzahl die folgenden Schritte enthält:
Verändern der Anzahl der Pole des Motors gemäß der eingestellten Schleuderdrehzahl;
Regeln der an den Motor angelegten Spannung entsprechend der eingestellten Anzahl von Polen und der eingestellten Schleuderdrehzahl; und
Umwandeln der Schleuderdrehzahl durch Phasenregelung einer Spannung, so dass die Spannung an den Motor angelegt werden kann.

2. Verfahren nach Anspruch 1, bei welchem die Schleuderdrehzahl durch den Benutzer eingestellt wird.

3. Verfahren nach Anspruch 1, bei welchem die Schleuderdrehzahl durch Erfassen der Menge und der Qualität der Wäsche und durch Bestimmen der Schleuderdrehzahl in Übereinstimmung mit den erfassten Daten eingestellt wird.

4. Verfahren nach einem der Ansprüche 1-3, bei welchem die Waschmaschine eine Trommelwaschmaschine ist.

5. Verfahren nach einem der Ansprüche 1-4, bei welchem die Anzahl der Pole in 4 oder 8 geändert wird.

6. Verfahren nach einem der Ansprüche 1-5, bei welchem der Schritt des Veränderns der gegenwärtigen Schleuderdrehzahl in die eingestellte Schleuderdrehzahl durch eine Phasenregelung einer gegenwärtigen Spannung die Schritte enthält:
Erfassen eines der Schleuderdrehzahl entsprechenden Anschnittwinkels; und
Verändern der an den Motor angelegten Spannung in Übereinstimmung mit dem erfassten Anschnittwinkel.

7. Verfahren nach einem der Ansprüche 1-6, bei welchem der Motor ein Asynchronmotor ist.

8. Verfahren nach Anspruch 1, ferner enthaltend das Einstellen einer an den Motor angelegten Spannung in Übereinstimmung mit einem Motordrehmoment, einer Schleuderdrehzahl und einer Last.

## Revendications

1. Procédé pour la commande d'une vitesse d'essorage d'un lave-linge, comprenant les étapes de:
réglage de la vitesse d'essorage sur la base de la quantité de linge placé dans le lave-linge; et
commande de la vitesse de rotation d'un moteur du lave-linge sur la base de la vitesse d'essorage réglée,
**caractérisé en ce que** l'étape de commande de la vitesse de rotation comprend les étapes suivantes:
changement du nombre de pôles du moteur selon la vitesse d'essorage réglée;
commande de la tension appliquée au moteur correspondant au nombre de pôles réglé et à la vitesse d'essorage paramétrée; et
conversion de la vitesse d'essorage par une commande de phase d'une tension de sorte que la tension peut être entrée au moteur.

2. Procédé selon la revendication 1, dans lequel la vitesse d'essorage est réglée par l'utilisateur.

3. Procédé selon la revendication 1, dans lequel la vitesse d'essorage est réglée en détectant la quantité et la qualité du linge et en déterminant la vitesse d'essorage selon les données détectées.

4. Procédé de l'une des revendications 1 à 3, dans lequel le lave-linge est une machine à tambour.

5. Procédé selon l'une des revendications 1 à 4, dans lequel le nombre de pôles est modifié à 4 ou 8.

6. Procédé de l'une des revendications 1 à 5, dans lequel l'étape de variation de la vitesse actuelle d'essorage en une vitesse d'essorage réglée à travers une commande de phase d'une tension actuelle comprend les étapes de:
détection d'un angle d'amorçage correspondant à la vitesse d'essorage; et
variation de la tension qui est appliquée au moteur selon l'angle d'amorçage détecté.

7. Procédé l'une des revendications 1 à 6, dans lequel le moteur est un moteur à induction.

8. Procédé de la revendication 1, comprenant en outre le réglage de la tension appliquée au moteur selon un couple de moteur, une vitesse d'essorage et une charge.
